# EUROPÄISCHE PATENTSCHRIFT

(11) **EP 1 718 481 B1**
(45) Veröffentlichungstag und Bekanntmachung des Hinweises auf die Patenterteilung: **06.06.2007**
(21) Anmeldenummer: 05701225.4
(22) Anmeldetag: 28.01.2005
(51) Int. Cl.: B60C 23/04

(54) **FAHRZEUGREIFEN MIT STAHLGÜRTELDRÄHTEN SOWIE MIT EINER IM BEREICH DER LAUFFLÄCHE ANGEORDNETEN DIPOL-ANTENNE**
VEHICLES TYRES PROVIDED WITH STEEL BELT WIRES AND COMPRISING A DIPOLE ANTENNA ARRANGED IN THE REGION OF THE RUNNING SURFACE
PNEUMATIQUE POUR VEHICULE POURVU DE CABLES DE CARCASSE EN ACIER AINSI QUE D'UNE ANTENNE DIPOLE DISPOSEE DANS LA ZONE DE LA BANDE DE ROULEMENT

(30) Priorität: 24.02.2004 DE 102004008929
(43) Veröffentlichungstag der Anmeldung: 08.11.2006
(73) Patentinhaber: Bayerische Motorenwerke Aktiengesellschaft, 80809 München (DE)
(72) Erfinder: ELLMANN, Manfred, 84172 Buch am Erlbach (DE); LASKE, Lothar, 82205 Gilching (DE)
(86) Internationale Anmeldenummer: PCT/EP2005/000820
(87) Internationale Veröffentlichungsnummer: WO 2005/080098

(56) Entgegenhaltungen:
- EP-A- 1 049 196
- WO-A-03/105509
- WO-A-20/04016454
- PATENT ABSTRACTS OF JAPAN Bd. 1999, Nr. 05, 31. Mai 1999 (1999-05-31) & JP 11 042915 A (YOKOHAMA RUBBER CO LTD:THE), 16. Februar 1999 (1999-02-16)

## Beschreibung

Die Erfindung betrifft einen Fahrzeugreifen mit Stahlgürteldrähten sowie mit einer im Bereich der Reifen-Lauffläche angeordneten Dipol-Antenne zur Datenübermittlung, insbesondere für einen Transponder zur Übermittlung von Energie und Messgrößen, ggf. Daten, die mit einer am Fahrzeug angeordneten Sende- und Empfangsantenne zusammenwirkt. Zum technischen Umfeld wird neben der DE 102 23 800 A1 auf das Patent Abstract zu JP11042915A sowie auf die EP-A-1049196 verwiesen.

Mittels einer geeigneten Antenne in einem Fzg.-Reifen sowie bevorzugt mittels eines zugehörigen Transponders können relativ einfach Daten und physikalische Messgrößen, insbesondere der Reifen-Luftdruck und/oder Reifen-Temperaturen und/oder mechanische Reifen-Spannungen an eine am Fahrzeug-Aufbau angebrachte Empfangsantenne übertragen werden und von dieser an eine elektronische Auswerteeinheit weitergeleitet werden, in welcher bspw. eine Überwachung des Reifen-Luftdrucks durchgeführt wird. Bekannt sind dabei unterschiedliche Anbauorte für die aufbaufeste Sende- und Empfangsantenne, so bspw. gegenüberliegend dem jeweils obersten Laufflächen-Abschnitt des Reifens, d.h. an der Innenseite des Fzg.-Radhauses im Deckenbereich oder Spritzwandbereich. Hierfür kann die Antenne im Reifen bspw. als Ringantenne ausgebildet und bevorzugt in der Lauffläche des Reifens - und somit nahe der Empfangsantenne - angeordnet sein, so wie dies in der DE 102 17 215 A1 gezeigt ist. Einen anderen bevorzugten Anbauort für die Empfangsantenne stellt die innere Seitenwand des Fzg.-Radhauses dar, wo diese Antenne sowie deren Peripherie bestmöglich vor Verschmutzung und Beschädigung geschützt werden kann. Dann sollte eine Reifen-Ringantenne in bzw. an der dieser inneren Seitenwand des Fzg.-Radhauses zugewandten Seitenwand des Reifens vorgesehen sein, so wie dies bspw. in der EP 1 344 658 A1 gezeigt ist, da andernfalls die Übertragung von Daten (und Energie) aufgrund eines zu großen Abstandes nicht gewährleistet wäre.

Die Anbringung einer Ringantenne in der Seitenwand des Reifens hat jedoch Nachteile, da sichergestellt sein muss, dass der Reifen derart auf der Felge montiert ist, dass bei montiertem Fzg.-Rad die Reifen-Rinngantenne der fahrzeugfesten Sende- und Empfangsantenne zugewandt ist. Dies hat zur Folge, dass bei laufrichtungsgebundenen Reifen (und das sind die meisten der heutigen M+S-Reifen) linke und rechte Reifen bevorratet gehalten werden müssen, was u.a. beim Fahrzeughersteller die Variantenvielfalt sowohl bei der Fahrzeugproduktion als auch im Ersatzteilhandel verdoppeln würde.

Sowohl bei laufrichtungsgebundenen als auch bei nicht-laufrichtungs-gebundenen Reifen wird bei Nichtbeachtung der richtigen Reifen-Seiten-Zuordnung zum Fahrzeug die Telemetrie-Kommunikation zwischen dem Reifen-Transponder und dem Fahrzeug unterbrochen, was eine Störung verursacht und somit vermieden werden sollte. Da jedoch insbesondere bei nicht-laufrichtungs-gebundenen sog. Normalreifen insbesondere bei Durchführung eines Reifenwechsels außerhalb einer Fachwerkstatt die richtige Seitenzuordnung nicht beachtet werden dürfte, ist daher mit den geschilderten bekannten Fahrzeug-Reifen mit an einer Seitenwand umlaufenden Ringantenne eine große Anzahl von Störfällen zu befürchten.

Neben den soweit erläuterten Ring-Antennen ist auch die Verwendung von Dipol-Antennen zur Daten- und Energieübertragung zwischen einem Fzg.-Reifen und dem Fzg.-Aufbau bekannt, wie bspw. die eingangs genannte DE 102 23 800 A1 zeigt. In dieser Schrift ist vorgeschlagen, die Dipol-Antenne mit Transponder im Bereich des Reifenwulstes oder an der Reifenseitenwand jeweils reifeninnenseitig anzubringen, womit sich jedoch wieder das oben geschilderte Problem bezüglich der richtigen Seiten-Zuordnung einstellt. Alternativ kann nach dieser Schrift der Transponder mit Dipolantenne im Bereich der Reifenlauffläche angeordnet sein.

Mit der einer solchen Anordnung einer Dipol-Antenne im Laufflächenbereich eines Fzg.-Reifens kann zwar das geschilderte Problem bezüglich der richtigen Seiten-Zuordnung gelöst werden, jedoch weisen die üblichen Fzg.-Reifen insbesondere im Laufflächenbereich bekanntermaßen Lagen von Stahlgürteldrähten auf, die eine unerwünschte Dämpfung der Übertragungsleistung zwischen der reifenseitigen Dipolantenne und der aufbauseitigen Sende- und Empfangsantenne verursachen.

Eine Abhilfemaßnahme für diese geschilderte Problematik aufzuzeigen, ist Aufgabe der vorliegenden Erfindung.
Die Lösung dieser Aufgabe ist für einen Fzg.-Reifen nach dem Oberbegriff des Anspruchs 1 dadurch gekennzeichnet, dass die Dipol-Antenne derart im wesentlichen quer zur den Stahlgürteldrähten angeordnet ist, dass die Dipol-Antenne mit ihrer Längsachse im wesentlichen senkrecht zur Symmetrieachse zwischen den beiden sich kreuzenden Lagen von Stahlgürteldrähten ausgerichtet ist.

Wenn die Dipolantenne und bevorzugt mit dieser der zugehörige Transponder im Mittenbereich der Reifen-Lauffäche von der Innenseite auf oder unter dem sog. Inliner des Reifens angebracht wird, so ist verwechslungssicher gewährleistet, dass die Dipol- oder Transponderantenne unabhängig davon, mit welcher Seite der Reifen auf das Rad montiert wird und auf welcher Fahrzeugseite das Rad angebaut wird, immer in gleicher Ausrichtung zur fahrzeugfesten Antenne läuft. Zum Einsatz kommen kann dabei eine offene gerade Dipol-Antenne, die bei Verwendung einer weltweit zugelassenen Übertragungsfrequenz von 2,45 GHz nur eine wirksame Dipollänge in der Größenordnung von 6 cm haben muss, wobei Abweichungen nach oben und unten um ca. 15% möglich sind. Eine Dipol-Antenne mit derart kurzen Abmessungen lässt sich auch zusammen mit dem zugehörigen Transponder leicht in einem bspw. für Personenkraftwagen üblichen Stahlgürtelreifen unterbringen.

Allerdings ist die Dipol-Antenne nur über eine geringe Distanz von wenigen Millimetern von den im Laufflächenbereich von Fzg.-Reifen üblicherweise vorgesehenen Stahlgürteldrähten entfernt und wird dadurch in ihrer Wirkung bedämpft. Nun wurde erkannt, dass diese Dämpfung dann relativ stark ist, wenn die Dipol-Antenne in ihrer Längsrichtung parallel zur Längsrichtung der Gürteldrähte verläuft, hingegen relativ schwach ist, wenn sie mit ihrer Längsachse im wesentlichen rechtwinkelig bzw. quer (d.h. unter einem Winkel in der Größenordnung von 90°) zu den Gürteldrähten liegt.

Üblicherweise sind in Fzg.-Reifen die Stahlgürteldrähte in sich kreuzenden Lagen angeordnet, und zwar in einem Winkelbereich von +/- 20° bis +/- 30° gegenüber der Längsachse des Laufflächen-Profiles geneigt, wobei diese genannte Längsachse orthogonal zur Drehachse des Reifens verläuft. Somit lässt sich also eine relativ geringe Antennendämpfung der Transponder-Dipol-Antenne erreichen, wenn diese möglichst stark quer zu den Gürtelfäden bzw. Stahlgürteldrähten liegt und somit also quer zur Längsachse des Reifen-Profiles. Hierzu wird auf die beigefügte Prinzipskizze verwiesen, die abgewickelt zwei sich kreuzende Lagen von Stahlgürteldrähten in der Lauffläche eines erfindungsgemäßen Reifens mit eingebauter Dipol-Antenne mit Transponder zeigt.
Dabei ist mit der Bezugsziffer 1 die Längsachse des Laufflächen- oder Reifenprofils gekennzeichnet, die in einer senkrechten Projektion auf die Drehachse Q des Reifens mit dieser Reifen-Drehachse Q einen Winkel von 90° einschließt. Eine erste Lage von Stahlgürteldrähten in der Reifen-Lauffläche ist mit dem Buchstaben "A" und eine sich mit dieser kreuzende zweite Lage von Stahlgürteldrähten mit dem Buchstaben "B" gekennzeichnet. Die erste Lage A ist gegenüber der Längsachse 1 um einen Winkel a in der Größenordnung von 28° und die zweite Lage B ist gegenüber der Längsachse 1 um einen Winkel b in der Größenordnung von 22° geneigt, was einem üblichen Aufbau eines Stahlgürtelreifens mit asymmetrischen Gürtelwinkeln entspricht.

Mit der Bezugsziffer 2 ist ein grundsätzlich bekannter sog. Transponder bezeichnet, der Messdaten aus dem Fzg.-Reifen aufnehmen und geeignet umwandeln kann, die dann über eine Antenne aus dem Reifen an eine figürlich nicht dargestellte Sende- und Empfangsantenne am Fahrzeug übermittelt werden. Dabei ist die im Reifen vorgesehene Antenne als Dipol-Antenne 3 ausgebildet, mit zwei Dipolen D1, D2, die vom Transponder 2 seitlich abstehen. Die Längsachse dieser Dipol-Antenne 3 trägt die Bezugsziffer 3*.

Hier ist nun die Dipolantenne 3 mit ihrer Längsachse 3* im wesentlichen senkrecht zur Symmetrieachse s zwischen den beiden sich kreuzenden Lagen A, B von Stahlgürteldrähten ausgerichtet, wobei deren Symmetrieachse s um den Winkel c = (a - b)/2 = (28° - 22°)/2= 3° schief zur Längsachse 1 des Reifen-Profils verläuft. Der Antennendipol bzw. dessen Längsachse 3* verläuft dann nicht um 90°, sondern um den Winkel d = 90° + c = 90° + 3° = 93° gegenüber der Längsachse 1 des Reifen-Profils geneigt. Da bei der Reifenherstellung die Gürtelwinkel a und b selbstverständlich bekannt sind, kann somit auch die Transponder- Dipol-Antenne 3 exakt ausgerichtet im Winkel d nach der o.g. Formel für d eingebaut werden.

Optimiert werden kann die Übertragungsgüte zwischen der fahrzeugfesten Sende- und Empfangsantenne und der Dipol-Antenne 3 des Reifen-Transponders 2 dadurch, dass die fahrzeugfeste Antenne so ausgerichtet wird, dass sie die gleiche oder zumindest nahezu die gleiche Polarisierungsebene hat wie die Transponder-Dipol-Antenne 3 mit den Dipolen D1, D2. Mit den vorgeschlagenen Maßnahmen kann gegenüber der ungünstigsten Anordnung die Gesamtdämpfung von 48 dB auf 42 dB reduziert werden, was erfahrungsgemäß die Übertragungsrobustheit der gesamten Funkstrecke deutlich verbessert bzw. höhere Energieressourcen für besonders verbrauchsintensive Sensoren im Transponder ermöglicht.

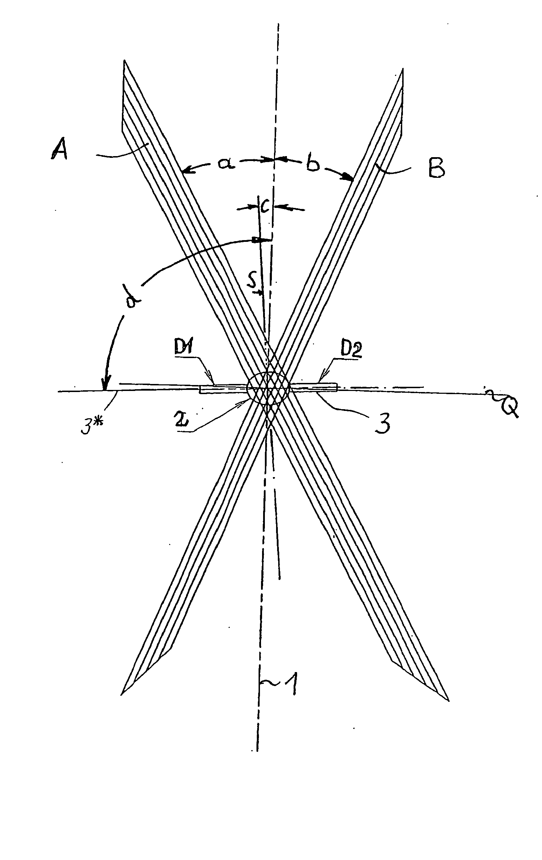

## Patentansprüche

1. Fahrzeugreifen mit Stahlgürteldrähten, wobei die Gürtelwinkel der beiden sich kreuzenden Lagen (A, B) von Stahlgürteldrähten gegenüber der Längsachse (1) des Reifenprofils ungleich sind, sowie mit einer im Bereich der Reifen-Lauffläche angeordneten Dipol-Antenne (3) zur Datenübermittlung, insbesondere für einen Transponder zur Übermittlung von Energie und Messgrößen, die mit einer am Fahrzeug angeordneten Sende- und Empfangsantenne zusammenwirkt,
**dadurch gekennzeichnet, dass** die Dipol-Antenne (3) derart im wesentlichen quer zur den Stahlgürteldrähten angeordnet ist, dass die Dipol-Antenne (3) mit ihrer Längsachse (3*) im wesentlichen senkrecht zur Symmetrieachse (s) zwischen den beiden sich kreuzenden Lagen (A, B) von Stahlgürteldrähten ausgerichtet ist.

2. Fahrzeugreifen nach Anspruch 1,
**dadurch gekennzeichnet, dass** die Dipol-Antenne (3) eine wirksame Dipollänge in der Größenordnung von 5 cm bis 7 cm und insbesondere 6 cm bei Verwendung einer Übertragungsfrequenz von 2,45 GHz besitzt.

3. Kraftfahrzeug mit einem Fahrzeugreifen nach einem der vorangegangenen Ansprüche,
**dadurch gekennzeichnet, dass** die Sende- und Empfangsantenne so ausgerichtet ist, dass sie im wesentlichen die gleiche Polarisierungsebene wie die Dipolantenne besitzt.

## Claims

1. A vehicle tyre comprising steel belt wires, wherein the belt angles of the two intersecting layers (A, B) of steel belt wires relative to the longitudinal axis (1) of the tyre profile are not equal, and a dipole antenna (3) arranged in the region of the tyre tread for data transmission, more especially for a transponder to transmit energy and measured variables, which antenna cooperates with a transmitting and receiving antenna arranged on the vehicle, **characterised in that** the dipole antenna (3) is arranged substantially transversely to the steel belt wires in such a way that the dipole antenna (3) is aligned with its longitudinal axis (3*) substantially perpendicular to the axis of symmetry (s) between the two intersecting layers (A, B) of steel belt wires.

2. A vehicle tyre according to claim 1, **characterised in that** the dipole antenna (3) has an effective dipole length in the order of magnitude of 5 cm to 7 cm and in particular 6 cm when using a transmission frequency of 2.45 GHz.

3. A motor vehicle with a vehicle tyre according to any one of the preceding claims, **characterised in that** the transmitting and receiving antenna is aligned in such a way that it substantially has the same polarisation plane as the dipole antenna.

## Revendications

1. Pneumatique de véhicule dont les angles de ceinture des deux nappes (A, B) de câbles métalliques de ceinture qui se croisent, sont différents par rapport à l'axe longitudinal (1) du profil du pneumatique, et qui est pourvu d'une antenne dipôle (3) disposée au niveau de la bande de roulement pour transmettre des données, en particulier pour un transpondeur permettant la transmission d'énergie et de grandeurs de mesure, en coopération avec une antenne d'émission et de réception disposée sur le véhicule,
**caractérisé en ce que**
l'antenne dipôle (3) est essentiellement transversale aux câbles métalliques de ceinture pour que son axe longitudinal (3*) soit essentiellement perpendiculaire à l'axe de symétrie (s) entre les deux nappes (A, B), qui se croisent.

2. Pneumatique de véhicule selon la revendication 1,
**caractérisé en ce que**
l'antenne dipôle (3) a une longueur de dipôle efficace de l'ordre de 5 à 7 cm et, en particulier, de 6 cm lorsqu'on utilise une fréquence de transmission de 2,45 GHz.

3. Véhicule automobile ayant un pneumatique selon l'une des revendications précédentes,
**caractérisé en ce que**
l'antenne d'émission et de réception est orientée de manière à avoir, pour l'essentiel, le même plan de polarisation que l'antenne dipôle.
